Europäisches Patentamt

**European Patent Office**

**Office européen des brevets**

(19)

(11) Numéro de publication : **0 131 334**
**B1**

# (12) FASCICULE DE BREVET EUROPÉEN

(45) Date de publication du fascicule du brevet :
30.09.87

(51) Int. Cl.⁴ : **B 60 N  1/06, A 47 C  7/46**

(21) Numéro de dépôt : **84200957.3**

(22) Date de dépôt : **02.07.84**

(54) **Siège de véhicule présentant une surface d'appui mobile verticalement.**

(30) Priorité : 06.07.83 CH 3705/83
03.01.84 CH 8/84

(43) Date de publication de la demande :
16.01.85 Bulletin 85/03

(45) Mention de la délivrance du brevet :
30.09.87 Bulletin 87/40

(84) Etats contractants désignés :
**DE FR GB IT**

(56) Documents cités :
**EP-A- 0 046 892**
**WO-A-85 /000 29**
**CH-A-  411 596**
**CH-A-  548 753**
**DE-A- 2 420 277**
**DE-B- 1 105 291**
**FR-A- 1 329 394**
**FR-A- 2 101 302**
**FR-A- 2 403 910**
**FR-A- 2 460 227**
**US-A- 1 273 953**
**US-A- 2 903 043**

(73) Titulaire : **Collinucci, Luigi**
**12 rue Crespin**
**CH-1206 Geneve (CH)**

(72) Inventeur : **Quayzin, Sylvia**
**12, rue Crespin**
**CH-1206 Geneve (CH)**

(74) Mandataire : **Meylan, Robert Maurice et al**
**c/o Bugnion SA Conseils en Propriété Industrielle 10,**
**Route de Florissant Case Postale 375**
**CH-1211 Genève 12 - Champel (CH)**

## Description

La présente invention a pour objet un siège de véhicule dont le dossier présente une partie d'appui en forme de boucle fermée souple susceptible de se déplacer approximativement verticalement selon un mouvement circulatoire en tournant autour de deux axes horizontaux et destinée à être entraînée par le frottement du dos de l'occupant du véhicule.

Il a déjà été relevé que les dossiers des sièges de véhicules utilisés à ce jour exercent des efforts répétés de compression sur la colonne vertébrale du conducteur et des passagers en raison de la réaction à la force de frottement du dos de la personne assise lors du déplacement vertical de cette personne dû aux inégalités et cahots de la route et à l'élasticité du placet du siège. Les forces de frottement et leurs réactions peuvent être relativement élevées, étant donné que le dossier est généralement utilisé en position inclinée avec une pression du dos relativement importante sur le dossier. Pour remédier à ce défaut, il a été proposé d'inclure dans le dossier un coussin pneumatique capable de se déformer en suivant le mouvement oscillant du dos (DE-A-24.20.277). Dans ce même document on a proposé de remplacer ce coussin pneumatique par des bandes sans fin montées sur deux jeux de galets coniques tournant librement sur deux axes parallèles. L'ensemble est encastré dans le dossier et n'occupe qu'une partie de la hauteur de la surface d'appui du dos. Le dos venant en appui contre les galets coniques, on a proposé de revêtir ces galets de mousse synthétique, mais un tel revêtement rend difficile la rotation des galets et réduit pratiquement à néant l'effet des rubans. D'autre part, en dessous et au-dessus des rubans mobiles, le dos vient en appui contre des parties fixes de telle sorte que les forces de frottement et les réactions se concentrent en ces points, l'effet bénéfique recherché étant ainsi supprimé. La position du dispositif n'est en outre pas adaptée à toutes les tailles de conducteurs et de passagers. Enfin, les vêtements entraînés par les rubans, soit vers le haut, soit vers le bas ont tendance à être pincés entre les rubans, sur les galets, et la partie fixe du dossier.

Dans un autre document (FR-A-2.403.910), il a été proposé de réaliser un siège à dossier suspendu, dans lequel la partie rembourrée du dossier peut coulisser verticalement sur un support fixe en étant maintenue dans sa position moyenne par des ressorts compensateurs, l'un la tirant vers le bas et l'autre la tirant vers le haut. La traction, respectivement la compression des ressorts compensateurs lorsque le dossier est en position haute, ont pour effet d'exercer à leur tour une force agissant vers le bas, qui peut également s'exercer alors que le dos de la personne assise n'a pas un mouvement descendant correspondant. Le mouvement de la personne assise et le mouvement oscillant du dossier peuvent même être occasionnellement en contre-phase de telle sorte que non seulement l'effet de suppression de la réaction au frottement peut être en grande partie annihilé mais que la compression du ressort vient s'ajouter à l'effet négatif de compression que l'on trouve dans un siège conventionnel.

Un fauteuil similaire est décrit dans le document WO-A-85/00 029. Ce fauteuil, bien que muni d'une garniture se présentant sous la forme d'une bande sans fin tendue autour d'un appui oscillant constitué par un coussin et passant sur deux rouleaux montés à rotation libre, se comporte sensiblement de la même manière que le siège précédent car le frottement entre le coussin et la garniture est tel que la garniture est entraînée par le coussin dans son mouvement oscillant.

La présente invention a pour but de réaliser un siège confortable en toute occasion, dans lequel la surface mobile d'appui du dossier est capable d'assurer un effet bénéfique sur la colonne vertébrale en toute condition, indépendamment de la taille de la personne assise et sans les inconvénients des systèmes proposés antérieurement.

Le siège du véhicule selon l'invention est caractérisé par le fait que ladite partie d'appui forme une surface continue s'étendant sur toute la hauteur du dossier et qu'elle est supportée directement et élastiquement, entre lesdits axes, par des éléments rotatifs de manière à pouvoir circuler autour du dossier.

Selon une forme d'exécution, en n'autorisant le mouvement circulatoire de la boucle que dans un seul sens, à savoir vers le haut pour sa partie antérieure en contact avec le dos du passager, il est en outre possible d'obtenir un effet favorable supplémentaire : lorsque le passager redescend relativement au dossier, la partie mobile de celui-ci est retenue et la réaction aux forces de frottement du dos sur le dossier engendre une force agissant vers le haut, c'est-à-dire une force de traction sur la colonne vertébrale. Or, une telle traction est bénéfique par son effet comparable à une extension du dos.

Le dessin annexé représente, à titre d'exemple, deux formes d'exécution du siège selon l'invention.

La figure 1 est une vue en perspective d'un siège selon une première forme d'exécution.

La figure 2 est une vue en perspective identique à celle représentée à la figure 1, mais avec une partie arrachée du dossier.

La figure 3 est une vue en perspective d'une partie du dossier du même siège.

La figure 4 est une vue schématique d'un mécanisme de verrouillage du dossier.

La figure 5 est une vue arrachée et partiellement éclatée du siège selon une seconde forme d'exécution.

La figure 6 est une vue de côté d'un ruban latéral de cette seconde forme d'exécution.

La figure 7 est une vue de détail d'un galet supportant le ruban.

La figure 8 est une vue en coupe de la vanne de réglage du circuit hydraulique, dans une première position.

Les figures 9, 10 et 11 représentent respectivement la même vanne dans trois autres positions.

La figure 12 représente une variante d'exécution de la seconde forme d'exécution.

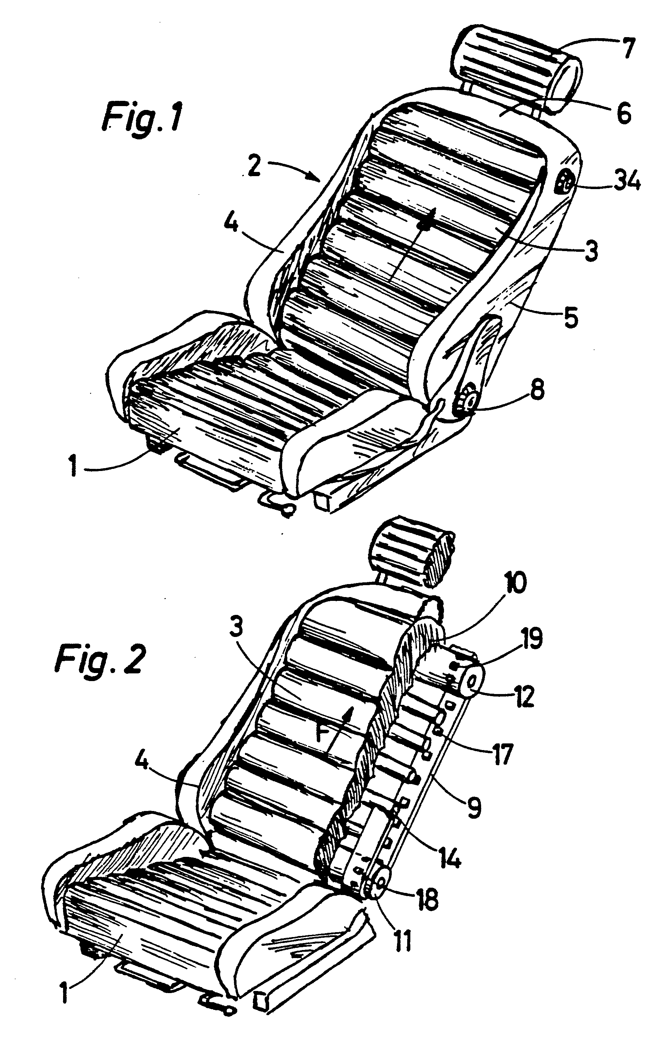

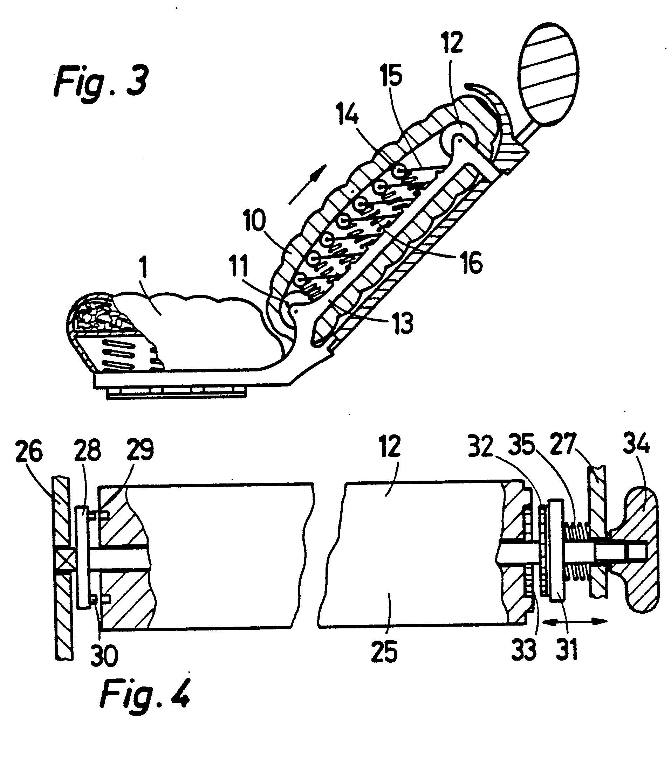

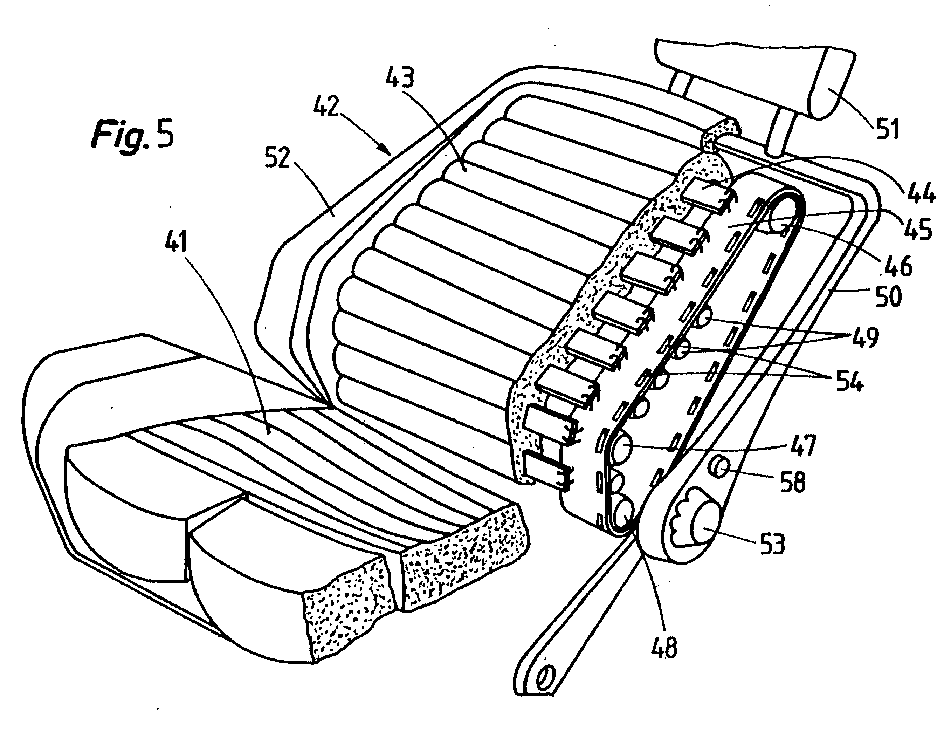

Le siège tel que représenté à la figure 1 ne se distingue pratiquement pas, extérieurement, d'un siège conventionnel. Il comprend un placet 1 comportant un coussin avec ressort et rembourrage et un dossier 2 comportant une partie centrale 3 pour l'appui du dos de chaque côté de laquelle sont disposés deux montants latéraux 4 et 5 fixes et rembourrés, reliés à leur extrémité supérieure par une partie 6 en forme d'arceau surmontée d'un appui-tête 7. Le dossier présente des moyens habituels de réglage de l'inclinaison 8. Comme ceci ressort toutefois des figures 2, 3 et 4, la partie 3 du dossier est constituée par un ruban 9 en matière souple mais résistante, de préférence peu élastique, par exemple une matière synthètique mi-dure, sur laquelle est fixée une mousse synthétique 10 revêtue d'un tissu ou de toute autre garniture de siège. Le ruban 9 et la mousse 10 forment une boucle fermée à la manière d'une courroie de transmission dont il est d'ailleurs possible de s'inspirer pour le choix du matériau constituant le ruban 9. La boucle ainsi formée est montée sur deux rouleaux 11 et 12, montés rotativement respectivement à la partie inférieure et à la partie supérieure du dossier, sur des axes pivotés dans les montants latéraux 4 et 5 du dossier sur un support rigide 13 (figure 4). Ces deux rouleaux 11 et 12 sont en outre reliés par une chaîne de transmission qui assure une rotation identique des rouleaux de manière à maintenir une tension constante sur le ruban 9 et à décharger celui-ci de cette tâche. Entre les rouleaux 11 et 12, la partie mobile 3 est supportée par des rouleaux 14 montés rotativement et librement à l'extrémité de bras oscillants 15 articulés sur le support 13 et dont les axes sont en outre montés sur des ressorts 16 s'appuyant sur le support 13, de manière à augmenter encore le confort du dossier. Le ruban 9 est prolongé latéralement de chaque côté de la garniture de mousse 10 (figure 3) et cette partie dépassante est munie de crans 17 à la manière d'une courroie crantée, ces crans coopérant avec des crans 18 et 19 des cylindres 11 et 12. Les parties dépassantes du ruban 9 sont cachées dans les montants latéraux 4 et 5. Le cylindre 11 est monté totalement libre en rotation. Le cylindre 12 est également libre en rotation, mais sa rotation peut être bloquée par le conducteur dans le sens antihoraire ou dans les deux sens au moyen d'un dispositif de blocage qui sera décrit en relation avec la figure 5. La rotation unidirectionnelle, c'est-à-dire dans le sens correspondant au déplacement du dossier dans le sens de la flèche F (figure 2), peut être assurée par tous moyens connus.

Selon la figure 4 le rouleau 12 est monté libre en rotation sur un arbre 25 fixe en rotation mais susceptible de se déplacer axialement. Cet arbre 25 est soutenu, dans les montants 4 et 5, par deux guidages 26 et 27 qui l'empêchent de tourner. A l'une de ses extrémités l'arbre 25 est muni d'un disque 28 solidaire de l'arbre et muni de dents ou saillies 29, 30 dirigées en direction du rouleau 12. De l'autre côté du rouleau 12, entre le rouleau et le guidage 27, l'arbre 25 porte un dispositif roue libre dont la couronne extérieure 31 est clavetée sur l'arbre 25 et donc fixe en rotation tandis que sa roue intérieure 32 est libre de tourner dans le sens correspondant à la flèche F (fig. 2). Cette roue 32 est munie d'une denture de chant destinée à engrener avec une denture de chant correspondante 33 prévue à l'extrémité du rouleau 12. L'extrémité de l'arbre 25 et vissée dans un bouton de commande 34. Le positionnement de l'arbre 25 est assuré par un ressort 35 monté entre le guidage 27 et la courroie 31.

Dans la position représentée le rouleau 12 est libre en rotation dans les deux sens : le dossier 3 suit le dos du passager dans ses mouvements ascendant et descendant.

Si on tourne le bouton 34 dans le sens horaire, l'arbre 25 est tiré en direction du bouton et les dents 29, 30 du disque 28 viennent bloquer le rouleau 12.

Si on tourne le bouton 34 dans le sens antihoraire (dévissage), l'arbre 25 est poussé vers la gauche par le ressort 35 et la roue 32 engrène avec la denture 33 du rouleau. Lorsque le passager se déplace vers le haut relativement au dossier, sous l'effet de la détente des ressorts du placet 1, son dos entraîne la partie 3 du dossier par adhérence. Celle-ci se déplace alors librement avec le dos du passager en circulant autour des rouleaux 11 et 12. Lorsque le passager redescend relativement au dossier, la partie 3 est retenue par le rouleau supérieur 12 bloqué en rotation inverse. Le frottement du dos sur la partie 3a alors pour effet d'engendrer une réaction se traduisant par une traction sur le dos, c'est-à-dire sur la colonne vertébrale.

Si l'on craint que le degré de liberté accordé au dossier permette au passager, lors de fortes secousses, d'être projeté contre le toit du véhicule, il est possible de limiter le mouvement ascendant de la partie 3 du dossier en limitant la vitesse de rotation du rouleau 11 et donc du rouleau 12 par la chaîne de transmission, au moyen d'un régulateur de Watt solidaire de la chaîne de transmission. Ce régulateur est efficace dans les deux sens de rotation, ce qui a pour effet de limiter les accélérations dans les deux sens. Un tel régulateur étant réglable quant à son effet de freinage sur le rouleau 11, il permet une adaptation au poids du conducteur. En outre ce régulateur constitue un dispositif de sécurité en cas de choc vertical, par exemple lors du passage du véhicule dans un nid de poule.

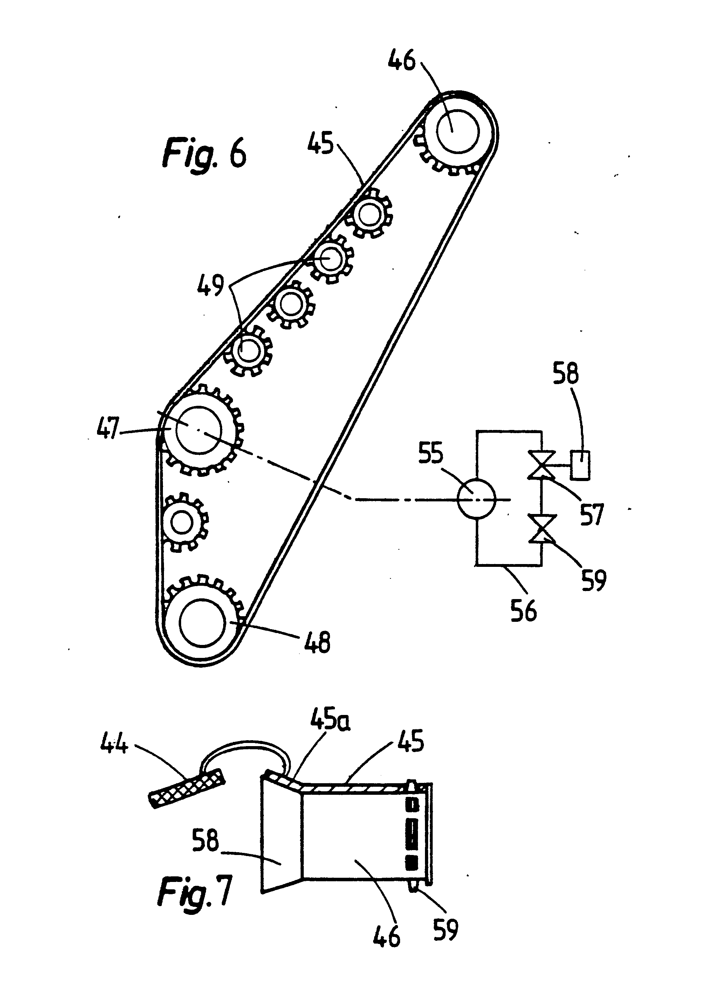

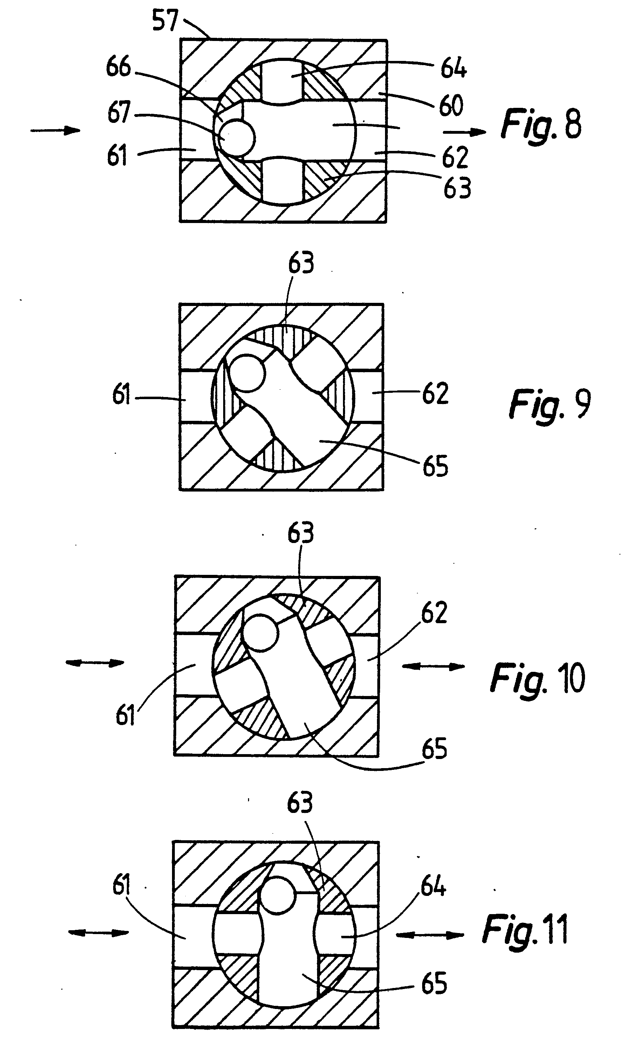

Le siège selon la seconde forme d'exécution représenté à la figure 5, comprend un placet rembourré 41 et un dossier 42 comportant une partie rembourrée 43, par exemple en mousse synthétique, formant une boucle fermée, traversée par des bandes élastiques 44 fixées à chacune

5 **0 131 334** 6

de leurs extrémités à un ruban souple 45 en acier, chacun de ces rubans étant supporté par des galets dentés 46, 47 et 48 et par une série de roues dentées 49, ces mobiles étant montés eux-mêmes sur un cadre 50 en forme de U constituant le support du dossier et portant en outre un appui-tête 51. Les bandes 45 sont cachées dans un habillage latéral 52. L'inclinaison du dossier peut être réglée de manière connue au moyen d'un bouton 53. Les rubans en acier 45 sont munis de découpes 54 dans lesquelles s'engagent les dents des mobiles dentés 46 à 49. Dans le cadre 50, à la hauteur du galet 47, est en outre montée une pompe hydraulique 55 (figure 6) montée dans un circuit hydraulique 56 comprenant, en série, une première vanne 57 dont l'obturateur est actionnable par un bouton 58 accessible sur le côté du dossier, au-dessus du bouton 53, et une seconde vanne 59. La pompe 55 est entraînée par le galet 47, lui-même entraîné par le ruban 45 portant la partie rembourrée du dossier. Si nécessaire, une multiplication est prévue entre l'axe du galet 47 et la pompe 55. Les autres mobiles supportant les rubans 45 sont montés librement sur leur axe respectif. Lorsque le dossier est entraîné, la pompe 55 est alors actionnée et fait circuler le fluide dans le circuit 56, pour autant que les vannes 57 et 59 soient ouvertes. La vanne 59 est prévue pour limiter le débit du circuit, c'est-à-dire limiter la vitesse de rotation de la pompe 55, c'est-à-dire limiter l'accélération du dossier de manière à empêcher que le passager, lors de fortes secousses, soit projeté contre le toit du véhicule. Cette vanne 59 n'est en principe pas réglable par l'utilisateur, mais elle est réglée en usine ou en atelier, en fonction du poids du passager. La vanne 57, actionnable par le passager, est représentée en coupe, dans différentes positions, aux figures 8 à 11. Cette vanne comprend un corps de vanne 60 muni d'une entrée 61 et d'une sortie 62 alignées, et un obturateur cylindrique rotatif 63, actionnable directement par le bouton 58, et présentant deux passages perpendiculaires entre eux 64 et 65. L'un des orifices 66 du passage 65 est réalisé sous la forme d'une valve anti-retour au moyen d'une bille 67 ou d'un clapet conique ou toute autre construction connue.

Dans la position représentée à la figure 8, le fluide peut circuler dans le sens de la flèche F, mais pas en sens inverse, en raison de la valve anti-retour 26. Ce sens de circulation du fluide correspond à la montée de la partie antérieure du dossier 43, ce qui signifie que le passager pourra être soulevé sans frottement sur le dossier, relativement au placet 41, mais qu'il redescendra en frottant sur le dossier.

Dans la position représentée à la figure 9, dans laquelle on parvient en faisant tourner l'obturateur 63 de 45° relativement à la position représentée à la figure 8, la vanne 57 est complètement fermée. Le fluide ne peut pas circuler, la pompe est bloquée, et avec elle le dossier 43. Le siège se comporte alors comme un siège usuel.

En continuant de tourner l'obturateur 63 dans le sens horaire, on arrive dans la plage de réglage de freinage du dossier (figure 10). La vanne est progressivement ouverte de telle sorte que le passage pour le fluide est progressivement libéré.

Une fois que l'on a tourné de 90°, on arrive dans la position représentée à la figure 11 dans laquelle la vanne 57 est ouverte au maximum et autorise une circulation du fluide dans les deux sens, c'est-à-dire une liberté du dossier 43 aussi bien vers le haut que vers le bas.

Les rubans d'acier 45, qui sont sollicités en traction vers l'intérieur du siège par les bandes élastiques 4, sont retenus latéralement par exemple comme représentés à la figure 7. Les galets 46, 47 et 48 présentent une partie tronconique 68 sur laquelle s'appuie une partie 45a du ruban 45 formée de telle sorte qu'elle forme un coude avec le reste du ruban. Ce ruban 45 n'étant pas extensible, il est retenu par la partie 68. On voit sur ce dessin les dents 69 dont sont munis les galets 46, 47 et 48.

Il est toutefois possible de prévoir d'autres moyens pour retenir latéralement les rubans d'acier 45. Il est par exemple possible de prévoir des roulements linéaires dans les zones situées entre les galets 46 et 47 d'une part et entre les galets 47 et 48 d'autre part. Il est possible de munir le bord extérieur du ruban 45 de petits galets coniques roulant et retenus latéralement dans une glissière solidaire du cadre 50.

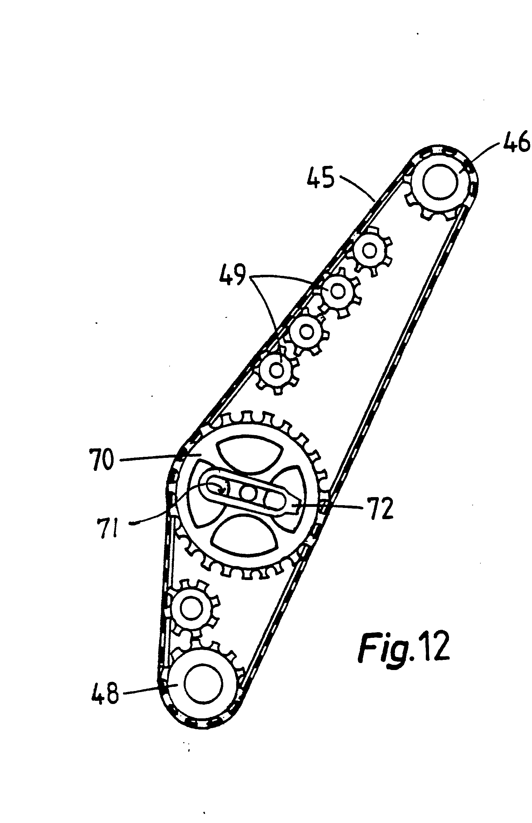

Dans la variante d'exécution représentée à la figure 12, les rubans 45 sont supportés, dans la région lombaire, par deux roues dentées 70 dont le diamètre est tel qu'elles supportent le ruban 45 sur deux parties diamétralement opposées de leur circonférence. L'axe commun de ces roues 70 est en outre monté dans des lumières 71 orientées sensiblement perpendiculairement aux rubans 45, lumières dans lesquelles l'axe des roues 70 peut être déplacé et bloqué dans la position désirée au moyen d'un dispositif de serrage, par exemple un écrou solidaire d'une poignée. Les lumières 71 sont pratiquées dans des supports 72 fixés au cadre 10. L'axe des roues 70 pourrait être monté dans les lumières par l'intermédiaire de coulisseaux montés sur des vis parallèles aux lumières pour leur positionnement le long des lumières. La pompe 55 est entraînée soit par l'un des mobiles 70, soit par l'un des autres mobiles entraînés par les rubans 45.

La possibilité de modifier la position de l'axe des roues 70 offre à l'utilisateur la possibilité d'adapter le mieux possible la courbure du dossier à la courbure particulière de sa zone lombaire.

Le siège selon l'invention présente un avantage supplémentaire : la circulation du dossier a pour effet de renouveler la partie en contact avec le dos du passager et de réduire ainsi l'échauffement du dos et la transpiration.

**Revendications**

1. Siège de véhicule dont le dossier (2) présente une partie d'appui (3, 47) en forme de boucle fermée souple susceptible de se déplacer approximativement verticalement selon un mouvement circulatoire en tournant autour de deux axes horizontaux (11, 12 ; 46, 48) et destinée à être entraînée par le frottement du dos de l'occupant du véhicule, caractérisé par le fait que ladite partie d'appui (3 ; 43) forme une surface continue s'étendant sur toute la hauteur du dossier et qu'elle est supportée directement et élastiquement entre lesdits axes (11, 12 ; 46, 48) par des éléments rotatifs (14 ; 47, 49), de manière à pouvoir circuler autour du dossier.

2. Siège selon la revendication 1, caractérisé par le fait que le dossier présente un mécanisme (28 à 35 ; 55 à 58) permettant, au choix du passager, soit de permettre à ladite partie d'appui de se déplacer dans les deux sens, soit de n'autoriser qu'un mouvement ascendant du dossier, soit de bloquer cette partie d'appui.

3. Siège selon la revendication 2, caractérisé par le fait que la partie d'appui (3) est rembourrée et fixée sur une bande souple (9) supportée par des rouleaux (11, 12) et dont au moins les zones latérales sont crantées et engrènent avec une partie crantée des rouleaux (11, 12), au moins le rouleau supérieur (12) étant muni d'un dispositif de rotation unidirectionnel (31).

4. Siège selon la revendication 3, caractérisé par le fait que le dispositif unidirectionnel est associé à un dispositif de limitation d'accélération.

5. Siège selon l'une des revendications 1, 2, 3 ou 4, caractérisé par le fait que les éléments mobiles rotatifs sont des rouleaux (14) dont les axes sont montés élastiquement.

6. Siège selon l'une des revendications 3 ou 4, caractérisé par le fait que les rouleaux (11, 12) sont reliés par une chaîne ou courroie de transmission.

7. Siège selon les revendications 4 et 6, caractérisé par le fait que ladite chaîne ou courroie est solidaire d'un régulateur de Watt.

8. Siège selon la revendication 1, caractérisé par le fait que ladite partie d'appui (43) est suspendue élastiquement entre deux rubans sans fin souples non extensibles (45) montés sur des roues, galets ou rouleaux (46 à 49).

9. Siège selon la revendication 8, caractérisé par le fait qu'une partie au moins desdites roues sont dentées et coopèrent avec des crans ou découpes d'au moins l'un des rubans.

10. Siège selon la revendication 8, caractérisé par le fait que les rubans sont supportés, dans la région lombaire, par des roues ou galets (70) dont l'axe commun est monté dans deux lumières (71) orientées sensiblement perpendiculairement aux rubans, des moyens étant prévus pour fixer cet axe, dans la position désirée, sur les lumières.

11. Siège selon la revendication 10, caractérisé par le fait que les roues ou galets montés dans lesdites lumières, ont un diamètre tel qu'ils supportent les rubans sur deux parties diamétralement opposées de leur circonférence.

12. Siège selon la revendication 2, caractérisé par le fait qu'il comprend une pompe hydraulique (55) entraînée par ladite partie d'appui (43) et montée dans un circuit hydraulique comprenant, en série avec la pompe, au moins une vanne de réglage de débit (57), commandée par un organe d'actionnement manuel (58).

13. Siège selon la revendication 12, caractérisé par le fait que le circuit hydraulique comprend une seconde vanne (59) pour limiter le débit.

14. Siège selon l'une des revendications 12 ou 13, caractérisé par le fait que la première vanne (57) comprend un corps de vanne (60) présentant une entrée et une sortie, et un obturateur cylindrique rotatif (63) présentant deux passages croisés dont les orifices sont susceptibles d'être placés en face de l'entrée et de la sortie du corps de vanne, l'un desdits orifices (66) étant réalisé sous la forme d'une valve anti-retour, de telle manière que l'on peut, au choix, laisser passer le fluide dans les deux sens en le freinant plus ou moins, ou le laisser passer dans un seul sens ou l'empêcher complètement de passer.

**Claims**

1. Vehicle seat of which the backrest (2) comprises a rest portion (3, 43) in the form of a flexible closed loop adapted to move in a substantially vertical direction with a circular motion by rotating about two spaced horizontal shafts (11, 12 ; 46, 48) and adapted to be driven by the friction exerted by the occupant of the vehicle, characterised by the fact that said rest portion (3, 47) constitutes a continuous surface extending throughout the height of the backrest and that said rest portion is supported directly and resiliently between said shafts (11, 12 ; 46, 48) by rotary members (14 ; 47, 49) so that it can move around the backrest.

2. Vehicle seat according to Claim 1, characterised by the fact that the backrest comprises a mechanism (28-35 ; 55-58) whereby, at the occupant's choice, said rest portion can be moved in both directions, or the backrest can move only upwards, or said rest portion is locked against movement.

3. Vehicle seat according to Claim 2, characterised by the fact that the rest portion (3) is padded and secured to a flexible endless belt (9) supported by a pair of rollers (11, 12) and of which at least the lateral areas are cogged and in meshing engagement with a cogged portion of said rollers (11, 12), at least the upper roller (12) being provided with a unidirectional rotation device (31).

4. Vehicle seat according to Claim 3, characterised by the fact said unidirectional device is associated with an acceleration limiting device.

5. Vehicle seat according to any of Claims 1-4, characterised by the fact that said movable rotary members consist of rollers (14) of which the shafts are resiliently mounted.

6. Vehicle seat according to any of Claims 3 or 4, characterised by the fact that said rollers (11, 12) are interconnected by a transmission belt or chain.

7. Vehicle seat according to any of Claims 4 or 6, characterised by the fact that said belt or chain is connected to a Watt governor.

8. Vehicle seat according to Claim 1, characterised by the fact that said rest portion (43) is resiliently suspended between two endless, flexible and non-extensible belts (45) mounted on wheels, rollers or pulleys (46-49).

9. Vehicle seat according to Claim 8, characterised by the fact that at least some of said wheels are cogged wheels co-operating with matching cogs or notches formed on at least one of said belts.

10. Vehicle seat according to Claim 8, characterised by the fact that said belts are supported, in the lumbar region, by wheels or rollers (70) of which the common shaft is mounted in a pair of elongated holes (71) extending substantially at right angles to said belts, means being provided for locking said shaft in the desired position in said elongated holes.

11. Vehicle seat according to Claim 10, characterised by the fact that the diameter of said wheels or rollers mounted in said elongated holes is such that said wheels or rollers support said belts on two diametrally opposed portions of their circumference.

12. Vehicle seat according to Claim 2, characterised by the fact that it comprises a hydraulic pump (55) driven by said rest portion (43) and mounted in a hydraulic circuit comprising, in series with said pump, at least one output control valve (57) responsive to a manual actuating member (58).

13. Vehicle seat according to Claim 12, characterised by the fact that said hydraulic circuit comprises a second valve (59) for limiting the hydraulic fluid output.

14. Vehicle seat according to any of Claims 12 or 13, characterised by the fact that the first valve (57) comprises a valve body (60) having an inlet port and an outlet port, and a cylindrical rotary valve member (63) provided with two crossed passages having their orifices adapted to be brought in proper registration with the inlet and outlet ports of said valve body, one of said orifices (66) constituting a non-return valve member so that the hydraulic fluid can be as desired either be allowed to flow in both directions while slowing down more or less its flow rate, or allowed to flow in a single direction, or prevented completely from flowing.

**Patentansprüche**

1. Fahrzeugsitz, dessen Rücklehne (2) einen Stützteil (3 ; 43) in Form eines geschlossenen, verformbaren Ringes aufweist, der sich annähernd vertikal in einer Umlaufbewegung um zwei horizontale Achsen (11, 12 ; 46, 48) verschieben kann und der durch die Reibung des Rückens des Fahrzeugpassagiers verschoben wird, dadurch gekennzeichnet, dass dieser Stützteil (3 ; 43) eine ununterbrochene Fläche bildet, die sich über die ganze Höhe der Rücklehne erstreckt, und dass er unmittelbar elastisch zwischen diesen Achsen (11, 12 ; 46, 48) von Drehelementen (14 ; 47, 49) in der Weise getragen wird, dass er die Rücklehne umlaufen kann.

2. Sitz nach Anspruch 1, dadurch gekennzeichnet, dass die Rücklehne einen Mechanismus (28 bis 35 ; 55 bis 58) aufweist, welcher je nach Wahl des Passagiers eine Verschiebung des Stützteiles entweder in beiden Richtungen ermöglicht oder nur eine Aufwärtsbewegung der Rücklehne zulässt oder diesen Stützteil blockiert.

3. Sitz nach Anspruch 2, dadurch gekennzeichnet, dass der Stützteil (3) gepolstert und an einem verformbaren Streifen (9) befestigt ist, welcher von Rollen (10, 11) getragen wird und wovon wenigstens die Randbereiche eingekerbt sind und mit einem eingekerbten Teil der Rollen (11, 12) in Eingriff stehen, wobei wenigstens die obere Rolle (12) mit einer einsinnigen Dreheinrichtung (31) versehen ist.

4. Sitz nach Anspruch 3, dadurch gekennzeichnet, dass die einsinnige Dreheinrichtung mit einer Geschwindigkeitsbegrenzungseinrichtung verbunden ist.

5. Sitz nach einem der Ansprüche 1, 2, 3 oder 4, dadurch gekennzeichnet, dass die beweglichen Drehelemente Rollen (14) sind, deren Achsen elastisch gelagert sind.

6. Sitz nach einem der Ansprüche 3 oder 4, dadurch gekennzeichnet, dass die Rollen (11, 12) mittels einer Kette oder eines Transmissionsriemens verbunden sind.

7. Sitz nach Anspruch 4 und 6, dadurch gekennzeichnet, dass diese Kette oder dieser Riemen an einem Watt-Regulator sitzen.

8. Sitz nach Anspruch 1, dadurch gekennzeichnet, dass dieser Stützteil (43) elastisch zwischen zwei endlosen, nicht dehnbaren Bändern (45) aufgehängt ist, die auf Rädern, Rollen oder Walzen (46 bis 49) gelagert sind.

9. Sitz nach Anspruch 8, dadurch gekennzeichnet, dass wenigstens ein Teil dieser Räder gezahnt ist und mit Kerben oder Ausschnitten an wenigstens einem der Bänder zusammenarbeitet.

10. Sitz nach Anspruch 8, dadurch gekennzeichnet, dass die Bänder im Lendenbereich von Rädern oder Rollen (70) getragen werden, deren gemeinsame Achse in zwei Langlöchern (7) gelagert ist, die etwa rechtwinklig zu den Bändern ausgerichtet sind, wobei Einrichtungen vorgesehen sind, um diese Achse in der gewünschten Lage in den Löchern zu blockieren.

11. Sitz nach Anspruch 10, dadurch gekennzeichnet, dass die in diesen Löchern gelagerten Räder oder Rollen einen solchen Durchmesser aufweisen, dass sie die Bänder an zwei diametral einander gegenüberliegenden Stellen ihres Umfanges tragen.

12. Sitz nach Anspruch 2, dadurch gekennzeichnet, dass er eine hydraulische Pumpe (55) aufweist, welche von diesem Stützteil (43) angetrieben wird und in einem hydraulischen Kreislauf angeordnet ist, der in Reihe mit der Pumpe wenigstens ein Durchflussregelventil (57) aufweist, das mittels eines Handbetätigungsorgans (58) gesteuert wird.

13. Sitz nach Anspruch 12, dadurch gekennzeichnet, dass der hydraulische Kreislauf ein zweites Ventil (59) zur Begrenzung des Durchflusses aufweist.

14. Sitz nach einem der Ansprüche 12 oder 13, dadurch gekennzeichnet, dass das erste Ventil (57) einen Ventilkörper (60) mit einem Eingang und einem Ausgang sowie einen zylindrischen Drehverschluss (63) mit zwei sich kreuzenden Durchgängen aufweist, deren Oeffnungen gegenüber den Eingang und den Ausgang des Ventilkörpers gebracht werden können und wovon eine dieser Oeffnungen (66) in Form eines Rückschlagventiles ausgebildet ist, so dass man wahlweise die Flüssigkeit entweder in beiden Richtungen unter mehr oder weniger Drosselung oder nur in einer einzigen Richtung durchlaufen lassen oder aber einen Durchlauf vollständig verhindern kann.

*Fig.1*

*Fig. 2*

Fig. 3

12

15

14

10

1

11

16

13

Fig. 4

26  28  29

12

32  35  27  34

30

25

33  31

Fig. 5

0 131 334

Fig. 6

Fig. 7

4

*Fig.* 8

*Fig.* 9

*Fig.* 10

*Fig.* 11

Fig.12